# EUROPEAN PATENT APPLICATION

(11) **EP 4 699 746 A1**
(43) Date of publication of application: **25.02.2026**
(21) Application number: 24877360.8
(22) Date of filing: 18.07.2024
(51) Int. Cl.: B25J 9/16, B25J 5/00, B25J 13/06, B25J 13/08, B25J 13/00, B25J 19/02, B66B 1/34

(54) **ROBOT USING ELEVATOR AND CONTROL METHOD THEREOF**

(30) Priority: 10.10.2023 KR 20230134493
(71) Applicant: Samsung Electronics Co., Ltd., Suwon-si, Gyeonggi-do 16677 (KR)
(72) Inventor: KANG, Sanghyun, Suwon-si Gyeonggi-do 16677 (KR); YUN, Dongsik, Suwon-si Gyeonggi-do 16677 (KR); MOON, Boseok, Suwon-si Gyeonggi-do 16677 (KR)
(74) Representative: Gulde & Partner
(86) International application number: PCT/KR2024/010383
(87) International publication number: WO 2025/079821

(57) **Abstract**

A robot and a controlling method thereof are provided. The robot includes: a driver; first and second communication interfaces; a memory storing instructions; and a processors configured to execute the instructions and cause the robot to: based on receiving an instruction to move to a second floor from a first floor, control the robot to board an elevator, based on identifying that the elevator is stopped, obtain through the first communication interface Wi-Fi device identification information, identify whether a floor on which the elevator is stopped is the second floor based on the Wi-Fi device identification information, based on identifying that the elevator is stopped on the second floor, identify whether the elevator door is open based on a RSSI value of a signal received through the second communication interface, and based on identifying that the elevator door is open, control the robot to get off the elevator.

## Description

### [TECHNICAL FIELD]

The present disclosure relates to a robot and a controlling method thereof. More particularly, the present disclosure relates to a robot that identifies a floor on which an elevator is stopped and a controlling method thereof.

### [BACKGROUND ART]

With the recent development of electronic technology, robots have been used in various industrial fields. Developments in object recognition technology have enabled robots to accurately distinguish between different objects. In addition, advances in autonomous driving technology have enabled robots to navigate to a targeted location without separate control commands. Serving robots that serve food ordered by users in restaurants, guide robots that give directions to uses in airports or large supermarkets, etc. show that the fields and ways in which robots are used have diversified.

As robots are used in a variety of fields, the types and sizes of driving spaces they navigate have also changed. Previously, robots could only drive in narrow and limited spaces, but now they can drive in larger and more open spaces. In particular, in large buildings with multiple floors, such as large supermarkets and airports, robots can use elevators to move between floors. Previously, a robot using an elevator obtained video or audio information about the stopping floor displayed on the elevator through a camera or microphone, or obtained information about the stopping floor of the elevator through a communication interface, in order to get off the elevator at a preset floor.

### [DETAILED DESCRIPTION OF THE DISCLOSURE]

### [TECHNICAL SOLUTION]

According to an aspect of the disclosure, a robot includes: a driver; a first communication interface; a second communication interface; at least one memory storing one or more instructions; and one or more processors configured to execute the one or more instructions, wherein the one or more instructions, when executed by the one or more processors, are configured to cause the robot to: based on receiving an instruction to move the robot to a second floor from a first floor, control the driver to cause the robot to board an elevator, based on identifying that the elevator is stopped, obtain through the first communication interface Wi-Fi device identification information for one or more Wi-Fi devices, identify whether a floor on which the elevator is stopped is the second floor based on the obtained Wi-Fi device identification information, based on identifying that the elevator is stopped on the second floor, identify whether a door of the elevator is open based on a received signal strength indicator (RSSI) value of a signal received through the second communication interface, and based on identifying that the door of the elevator is open, control the driver to cause the robot to get off the elevator.

The least one memory may store Wi-Fi device identification information for a plurality of floors, wherein the plurality of floors includes the first floor and the second floor, and the one or more instructions, when executed by the one or more processors, may be further configured to cause the robot to, based on identifying that the obtained Wi-Fi device identification information matches the stored Wi-Fi device identification information for the second floor, identify that the floor on which the elevator is stopped is the second floor.

The obtained Wi-Fi device identification information may include respective Wi-Fi signal intensities of each of the one or more Wi-Fi devices, the stored Wi-Fi device identification information may include respective Wi-Fi signal intensities of each of one or more Wi-Fi devices located on the plurality of floors, and the one or more instructions, when executed by the one or more processors, may be further configured to cause the robot to: obtain a first sorting order of the one or more Wi-Fi devices based on the respective Wi-Fi signal intensities, obtain a second sorting order of one or more Wi-Fi devices located on the second floor based on the stored Wi-Fi device identification information of the second floor, and identify whether the obtained Wi-Fi device identification information matches the stored Wi-Fi device identification information for the second floor by comparing the first sorting order and the second sorting order.

The one or more instructions, when executed by the one or more processors, may be further configured to cause the robot to: based on identifying that the obtained Wi-Fi device identification information does not match the stored Wi-Fi device identification information for the second floor, identify a similarity value between the obtained Wi-Fi device identification information and the stored Wi-Fi device identification information for the second floor, and based on the similarity value being equal to or greater than a preset value, identify that the floor on which the elevator is stopped is the second floor, and update the stored Wi-Fi device identification information for the second floor to the obtained Wi-Fi device identification information.

The one or more instructions, when executed by the one or more processors, may be further configured to cause the robot to: based on the RSSI value being greater than a preset value, identify that the door of the elevator is open.

The robot may further include: an inertial measurement unit (IMU) sensor, and the one or more instructions, when executed by the one or more processors, may be further configured to cause the robot to: identify an inter-floor travel time based on a sensing value obtained through the IMU sensor; and based on identifying that the elevator has moved from the first floor to the second floor based on the inter-floor travel time, identify whether the floor on which the elevator is stopped is the second floor based on the obtained Wi-Fi device identification information.

The at least one memory may store inter-floor travel time information, and the one or more instructions, when executed by the one or more processors, may be further configured to cause the robot to: identify an estimated inter-floor travel time from the first floor to the second floor based on the inter-floor travel time information, and based on identifying that the identified inter-floor travel time matches the estimated inter-floor travel time, identify that the elevator has moved from the first floor to the second floor.

The one or more instructions, when executed by the one or more processors, may be further configured to cause the robot to, based on identifying that the identified inter-floor travel time does not match the estimated inter-floor travel time: identify a third floor on which the elevator is stopped based on the inter-floor travel time information and the identified inter-floor travel time, based on identifying that the elevator resumes movement after stopping at the third floor, re-identify the inter-floor travel time based on the sensing value obtained through the IMU sensor, and identify whether the elevator has moved from the third floor to the second floor based on the re-identified inter-floor travel time.

The one or more instructions, when executed by the one or more processors, may be further configured to cause the robot to: identify a first time point at which the elevator begins to accelerate based on the obtained sensing value, identify a second time point at which the elevator begins to decelerate based on the obtained sensing value, and identify the inter-floor travel time of the elevator based on the first and the second time points.

According to an aspect of the disclosure, a method of controlling a robot includes: based on the robot receiving an instruction to move the robot to a second floor from a first floor, controlling a driver of the robot to cause the robot to board an elevator; based on identifying that the elevator is stopped, obtaining through a first communication interface of the robot Wi-Fi device identification information for one or more Wi-Fi devices; identifying whether a floor on which the elevator is stopped is the second floor based on the obtained Wi-Fi device identification information; based on identifying that the elevator is stopped on the second floor, identifying whether a door of the elevator is open based on a received signal strength indicator (RSSI) value of a signal received through a second communication interface of the robot; and based on identifying that the door of the elevator is open, controlling the driver to cause the robot to get off the elevator.

The identifying whether the floor on which the elevator is stopped is the second floor may include: obtaining Wi-Fi device identification information for the second floor from Wi-Fi device identification information for a plurality of floors, wherein the plurality of floors include the first and the second floors, and wherein the Wi-Fi device identification information for the plurality of floors is stored in at least one memory of the robot; comparing the obtained Wi-Fi device identification information with the stored Wi-Fi device identification information for the second floor; and based on identifying that the obtained Wi-Fi device identification information matches the stored Wi-Fi device identification information for the second floor, identifying that the floor on which the elevator is stopped is the second floor.

The obtained Wi-Fi device identification information may include respective Wi-Fi signal intensities of each of the one or more Wi-Fi devices, the stored Wi-Fi device identification information may include respective Wi-Fi signal intensities of each of one or more Wi-Fi devices located on the plurality of floors, and the comparing the obtained Wi-Fi device identification information with the stored Wi-Fi device identification information for the second floor may include: obtaining a first sorting order of the one or more Wi-Fi devices based on the respective Wi-Fi signal intensities, obtaining a second sorting order of one or more Wi-Fi devices located on the second floor based on the stored Wi-Fi device identification information of the second floor, and identifying whether the obtained Wi-Fi device identification information matches the stored Wi-Fi device identification information for the second floor by comparing the first sorting order and the second sorting order.

The method may further include: based on identifying that the obtained Wi-Fi device identification information does not match the Wi-Fi device identification information for the second floor, identifying a similarity value between the obtained Wi-Fi device identification information and the Wi-Fi device identification information for the second floor; based on the similarity value being equal to or greater than a preset value, identifying that the floor on which the elevator is stopped is the second floor; and updating the stored Wi-Fi device identification information for the second floor to the obtained Wi-Fi device identification information.

The identifying that the door of the elevator is open may include, based on the RSSI value being greater than a preset value, identifying that the door of the elevator is open.

According to an aspect of the disclosure, a non-transitory computer-readable recording medium having instructions stored therein, which when executed by at least one processor of a robot, cause the robot to execute a method including: based on the robot receiving an instruction to move the robot to a second floor from a first floor, controlling a driver of the robot to cause the robot to board an elevator; based on identifying that the elevator is stopped, obtaining through a first communication interface of the robot Wi-Fi device identification information for one or more Wi-Fi devices; identifying whether a floor on which the elevator is stopped is the second floor based on the obtained Wi-Fi device identification information; based on identifying that the elevator is stopped on the second floor, identifying whether a door of the elevator is open based on a received signal strength indicator (RSSI) value of a signal received through a second communication interface of the robot; and based on identifying that the door of the elevator is open, controlling the driver to cause the robot to get off the elevator.

### [BRIEF DESCRIPTION OF DRAWINGS]

The above and other aspects, features, and advantages of certain embodiments of the present disclosure will be more apparent from the following description taken in conjunction with the accompanying drawings, in which:
FIG. 1 is an exemplary view of a robot using an elevator;
FIG. 2 is a block diagram of a robot according to an embodiment;
FIG. 3 is an exemplary view illustrating a Wi-Fi device list including identification information about a plurality of Wi-Fi devices connectable to a robot according to an embodiment;
FIG. 4A and FIG. 4B are exemplary views illustrating a method for identifying a floor on which an elevator is stopped by comparing an obtained Wi-Fi device list with a Wi-Fi device list stored in a memory according to an embodiment;
FIG. 5 is an exemplary view illustrating a method for identifying a floor on which an elevator is stopped based on a similarity between an obtained Wi-Fi device list and a Wi-Fi device list of a second floor according to an embodiment;
FIG. 6 is an exemplary view illustrating a method for identifying whether the door of an elevator door is opened based on information about an amount of change in an RSSI value in response to opening or closing of the door of the elevator for each floor stored in a memory according to an embodiment;
FIG. 7 is an exemplary view illustrating a method for identifying floors traveled by an elevator based on inter-floor travel time information stored in a memory according to an embodiment;
FIG. 8 is an exemplary view illustrating a method for re-identifying a floor to which an elevator has moved according to an embodiment when it is identified that identified inter-floor travel time does not match estimated travel time;
FIG. 9 is a detailed block diagram of a robot according to an embodiment; and
FIG. 10 is a flowchart illustrating a method of controlling a robot according to an embodiment.

### [DETAILED DESCRIPTION OF EMBODIMENTS]

Since the disclosure may be variously modified and have several exemplary embodiments, specific exemplary embodiments of the disclosure will be illustrated in the drawings and be described in detail in the detailed description. However, it is to be understood that the disclosure are not limited to specific exemplary embodiments, but include all modifications, equivalents, and alternatives according to exemplary embodiments of the disclosure. Throughout the accompanying drawings, similar components will be denoted by similar reference numerals.

In describing the disclosure, when it is decided that a detailed description for the known functions or configurations related to the disclosure may unnecessarily obscure the gist of the disclosure, the detailed description therefor will be omitted.

In addition, the following exemplary embodiments may be modified in several different forms, and the scope and spirit of the disclosure are not limited to the following exemplary embodiments. Rather, these exemplary embodiments make the disclosure thorough and complete, and are provided to completely transfer the spirit of the disclosure to those skilled in the art.

Terms used in the disclosure are used only to describe specific exemplary embodiments rather than limiting the scope of the disclosure. Singular forms are intended to include plural forms unless the context clearly indicates otherwise.

In the disclosure, the expressions "have", "may have", "include" and or "may include" used herein indicate existence of corresponding features (e.g., elements such as numeric values, functions, operations, or components) but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element or an intervening element (e.g., a third element) may be present.

On the other hand, when an element (e.g., a first element) is referred to as being "directly coupled with/to" or "directly connected to" another element (e.g., a second element), it should be understood that there is no intervening element (e.g., a third element).

An expression "~configured (or set) to" used in the disclosure may be replaced by an expression, for example, "suitable for," "having the capacity to," "~designed to," "~adapted to," "~made to," or "~capable of' depending on a situation. A term "~configured (or set) to" may not necessarily mean "specifically designed to" in hardware.

Instead, an expression "~an apparatus configured to" may mean that the apparatus "is capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

In exemplary embodiments, a "module" or a "unit" may perform at least one function or operation, and be implemented by hardware or software or be implemented by a combination of hardware and software. In addition, a plurality of "modules" or a plurality of "units" may be integrated in at least one module and be implemented by at least one processor except for a 'module' or a 'unit' that needs to be implemented by specific hardware.

Various elements and regions in the drawings are schematically drawn. Therefore, the technical concept of the disclosure is not limited by a relative size or spacing drawn in the accompanying drawings.

Hereinafter, an embodiment according to the present disclosure will be described in detail with reference to the accompanying drawings.

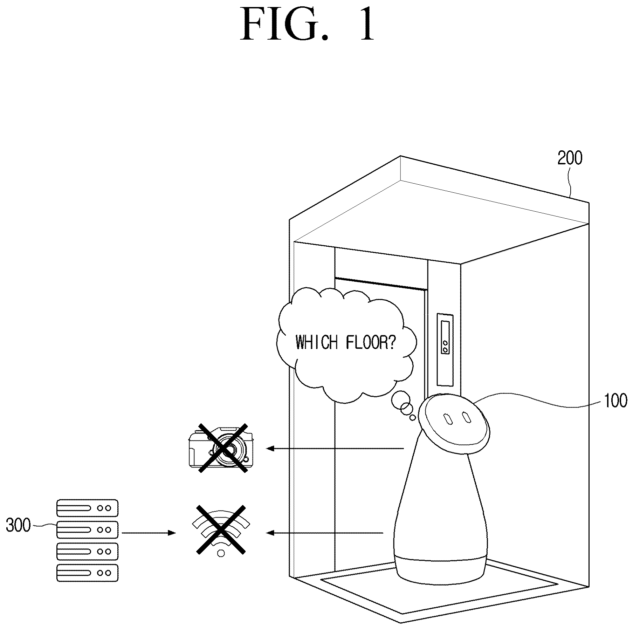

FIG. 1 is an exemplary view of a robot 100 using an elevator.

A robot 100 in a space 1 consisting of a plurality of floors (e.g., a building, a supermarket, an airport, etc.) may use an elevator 200 to move between floors. In this case, the robot 100 boarding the elevator 200 may perform communication with a control sever 300 of the elevator 200 to obtain information about the floor to which the elevator 200 has arrived, so that the robot 100 can accurately get off at the exit floor set for the robot 100. In addition, the robot 100 boarding the elevator 200 may use a camera (or a microphone) to obtain information about the arrival floor of the elevator 200 (e.g., video information about the arrival floor displayed on a display disposed in the elevator 200 or audio information about the arrival floor output through a speaker in the elevator 200) to accurately get off at the exit floor set for the robot 100.

However, as shown in FIG. 1, when the robot 100 performs communication with the control server 300 of the elevator 200 to obtain information about the arrival floor of the elevator 200, or when the robot 100 obtains information about the arrival floor of the elevator 200 through a camera (or a microphone), the robot 100 may fail to get off at the preset exit floor. For example, when there are multiple people with external electronic devices in the elevator 200, communication between the robot 100 and the control server 300 of the elevator 200 may be disrupted due to an interference phenomenon by the external electronic devices, and communication between the robot 100 and the control server 300 of the elevator 200 may be impeded or interrupted by a closed door of the elevator 200 while the elevator 200 is traveling. Alternatively, when multiple people board the elevator 200, the robot 100 may not be able to obtain information about the exit floor displayed on the display of the elevator 200 (or may not be able to obtain spoken information about the exit floor output through a speaker of the elevator 200 due to noise generated by the multiple people). Accordingly, there is a need for a method for the robot 100 to accurately recognize the arrival floor of the elevator 200 without communication with the control server 300 of the elevator 200 or the use of a camera (or a speaker).

To this end, the robot 100 according to an embodiment obtains information for identifying the arrival floor of the elevator 200 based on a communication interface. In particular, since the information obtained through the communication interface is obtained from each floor rather than from the control server 300 of the elevator 200, the robot 100 can accurately identify the floor to which the elevator 200 has arrived without communication with the control server 300 of the elevator 200.

In addition, the robot 100 according to an embodiment identifies the number of floors traveled by the elevator 200 that the robot has boarded based on sensing information obtained through a sensor. Accordingly, based on the number of floors traveled by the elevator 200, the robot 100 may identify the floor to which the elevator 200 has arrived. In particular, the sensing information that the robot 100 obtains using a sensor can be obtained without being interfered with by a person (or an animal) boarding the elevator 200, so that the robot 100 can accurately identify the floor to which the elevator 200 has arrived. Hereinafter, an embodiment will be described in detail in this regard.

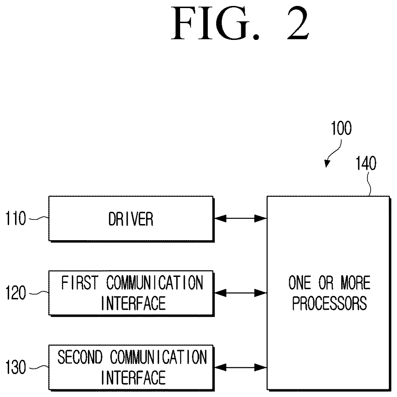

FIG. 2 is a block diagram of the robot 100 according to an embodiment.

Referring to FIG. 2, the robot 100 includes a driver 110, a first communication interface 120, a second communication interface 130, and one or more processors 140.

The driver 110 is configured to move the robot 100. In one example, the driver 110 may be provided on a lower portion of the robot 100 to move the robot 100. To this end, the driver 110 may be implemented as a plurality of wheels or a plurality of legs, and may further include a motor for powering the plurality of wheels or the plurality of legs.

The one or more processors 140 may control the driver 110 to control various driving operations of the robot 100, such as moving, stopping, controlling speed, and changing direction, etc. In this case, the driver 110 may adjust the driving direction and driving speed under the control of the one or more processors 140. To this end, the driver 110 may include a power generation device (e.g., a gasoline engine, a diesel engine, a liquefied petroleum gas (LPG) engine, an electric motor, etc. depending on the fuel (or energy source) used) to generate power for driving the robot 100, and a steering device (e.g., a mechanical manual steering, a hydraulics steering, an electronic control power steering (EPS), etc.) to adjust the driving direction.

The driver 110 drives at least a portion of the robot 100. In one example, the driver 110 may be implemented as a rotatable motor connecting a head and a body of the robot 100. Accordingly, the driver 110 may rotate the head connected to the driver 110 by 360° to allow the robot 100 to gaze at objects around the robot 100 or to obtain information about objects around the robot 100.

The first communication interface 120 may perform communication with an external device and an external server (e.g., the control server 300, etc.) through a Wi-Fi communication method. To this end, the first communication interface 120 may include a Wi-Fi communication module. Communicative connection of the first communication interface 120 with an external device and an external server may include communication performed through a third device (e.g., a repeater, a hub, an access point, a gateway, etc.).

The one or more processors 140 may obtain information about Wi-Fi devices in the vicinity of the robot 100 that are connectable to the robot 100 through the first communication interface 120. In addition, the one or more processors 140 may identify the floor on which the elevator that the robot 100 is boarding has stopped based on the information about the obtained Wi-Fi devices. In other words, the one or more processors 140 may identify, based on the obtained information about the Wi-Fi devices, at which floor the elevator the robot 100 is boarding has stopped, or whether the floor on which the elevator has stopped matches the floor input by the user (i.e., the destination floor of the robot 100). Here, the Wi-Fi devices may include a Wi-Fi access point, a Wi-Fi router, or the like.

The second communication interface 130 may perform communication with an external device and an external server (e.g., the control server 300, etc.) through a radio frequency (RF) communication method. In particular, the second communication interface 130 may perform communication with an external device and an external server based on a cellular communication method. To this end, the second communication interface 130 may include a cellular communication module using at least one of 3rd Generation (3G), 3rd Generation Partnership Project (3GPP), Long Term Evolution (LTE), LTE Advance (LTE-A), code division multiple access (CDMA), wideband CDMA (WCDMA), universal mobile telecommunications system (UMTS), Wireless Broadband (WiBro), or Global System for Mobile Communications (GSM).

The one or more processors 140 may detect the intensity of the RF signal received through the second communication interface 130 while the robot 100 is boarding the elevator 200. In addition, the one or more processors may identify whether the door of the elevator 200 where the robot 100 is boarding is opened based on the intensity of the detected RF signal.

The one or more processors 140 are electrically connected to the driver 110, the first communication interface 120, and the second communication interface 130 to control the overall operations and functions of the robot 100.

The one or more processors 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 140 may control one or any combination of the other components of the robot 100, and may perform communication-related operations or data processing. The one or more processors 140 may execute one or more programs or instructions stored in a memory. For example, the one or more processors 140 may perform a method according to an embodiment by executing one or more instructions stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 140 may be implemented as a single core processor comprising a single core, or as one or more multicore processors comprising a plurality of cores (e.g., homogeneous multicore or heterogeneous multicore). When one or more processors 140 are implemented as multicore processors, each of the plurality of cores included in a multicore processor may include an internal memory of the processor 140, such as cache memory, on-chip memory, and a common cache shared by the plurality of cores may be included in the multicore processor. Further, each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor 140 may mean a system-on-chip (SoC) in which one or more processors and other electronic components are integrated, a single-core processor, a multi-core processor, or a core included in a single-core processor or multi-core processor and here, the core may be implemented as CPU, GPU, APU, MIC, DSP, NPU, hardware accelerator, or machine learning accelerator, but the core is not limited to the embodiments of the present disclosure.

Hereinafter, the one or more processors 140 will be referred to as the processor 140 for convenience of explanation.

According to an embodiment, when a user input to move the robot, located on the first floor, to the second floor is received, the processor 140 may control the driver 110 to cause the robot 100 to board the elevator 200.

The robot 100 may be located within a space consisting of a plurality of floors (e.g., a building, a supermarket, etc.). In this case, the first floor may be a floor on which the robot 100 that receives a user input is located, and the second floor may be a floor on which the robot 100 is set to move in response to the user input. The processor 140 may receive the user input (i.e., an instruction) to move the robot 100 to the second floor through one of the first and second communication interfaces 120, 130. Alternatively, the processor 140 may receive the user input to move the robot 100 to the second floor through an input interface provided on the robot 100.

However, the present disclosure is not limited thereto, and the processor 140 may control the driver 110 to cause the robot 100 to board the elevator 200 without any user input when the processor 140 identifies that the robot 100 needs to travel from the floor on which the robot 100 is located (i.e., the first floor) to another floor (i.e., the second floor) in order to perform the next task according to the work process set for the robot 100.

The processor 140 may identify the location of the elevator 200 on the first floor where the robot 100 is located based on map data stored in a memory. In particular, the memory may store map data for each of a plurality of floors that constitute the space where the robot 100 is located. In this case, the processor 140 may obtain map data corresponding to the first floor on which the robot 100 is located from the memory, and may identify the location of the elevator 200 on the first floor based on the obtained map data. Subsequently, the processor 140 may control the driver 110 to move the robot 100 to the identified location of the elevator 200, and when the robot 100 is identified as having moved to the location of the elevator 200 based on the map data, the processor 140 may control the driver 110 to stop the robot 100. Here, the location of the elevator 200 may include a waiting area (i.e., a platform) for boarding the elevator 200 on the first floor (and each floor thereof) where the robot 100 is located.

The processor 140 may control a manipulation unit (e.g., an arm, a hand or the like to which a plurality of segments of the robot 100 are connected) of the robot 100 to manipulate a button or the like for calling the elevator 200 to the first floor. For example, the processor 140 may identify a button of the elevator 200 based on a relative position of the second floor to that of the first floor, and may use the manipulation unit of the robot 100 to press the button of the elevator 200.

The processor 140 may obtain, through a camera, video information regarding a floor (i.e., a floor on which the elevator 200 is located) displayed on a position indicator (e.g., a display) disposed on the platform of the elevator 200, and may identify, based on the obtained video information, whether the elevator 200 has arrived at the first floor. Alternatively, the processor 140 may obtain voice information indicating that the elevator 200 has arrived at the first floor through a microphone, and identify whether the elevator 200 has arrived at the first floor based on the obtained voice information.

When the processor 140 identifies that the elevator 200 has arrived at the first floor, the processor 140 may control the driver 110 to cause the robot 100 to board the elevator 200. In particular, the processor 140 may identify whether the door of the elevator 200 is opened, and when it is identified that the door of the elevator 200 is opened, the processor 140 may control the driver 110 to cause the robot 100 to move to the inside of the elevator 200.

In one example, the processor 140 may obtain a plurality of images of a door of the platform through a camera, and when it is identified that the door of the platform is opened based on the obtained images, the processor 140 may identify that the door of the elevator 200 is also opened. Alternatively, the processor 140 may obtain sensing information about an object located in the vicinity of the robot 100 through a sensor included in the robot 100. For example, the processor 140 may use a light detection and ranging (Lidar) sensor to obtain sensing information about a door on a platform. In this case, the processor 140 may identify whether the door of the platform is opened by identifying a distance between the robot 100 and the door of the platform, or by obtaining point cloud data about the door of the platform. In other words, when the distance between the identified robot 100 and the door of the platform changes, or when it is identified that the point cloud data about the door of the platform has changed, the processor 140 may identify that the door of the platform is opened. When it is identified that the door of the platform is opened, the processor 140 may identify that the door of the elevator 200 is also opened, and may control the driver 110 to cause the robot 100 to move to the inside of the elevator 200 and board the elevator 200.

When the robot 100 boards the elevator 200, the processor 140 may control a manipulation unit (e.g., an arm, a hand or the like to which a plurality of segments of the robot 100 are connected) of the robot 100 to manipulate a button or the like for selecting the second floor. For example, the processor 140 may obtain an image of a plurality of buttons disposed inside the elevator 200 through a camera, identify a button corresponding to the second floor among the plurality of buttons based on the obtained image, and press the button corresponding to the second floor using the manipulation unit of the robot 100.

According to an embodiment, when the elevator 200 stops, the processor 140 may obtain a Wi-Fi device identification information of one or more Wi-Fi devices connectable to the robot 100 through the first communication interface 120.

Specifically, the processor 140 may identify whether the elevator 200 has stopped while the robot 100 is boarding the elevator 200. In particular, the processor 140 may identify whether the elevator 200 has stopped based on sensing information obtained through a sensor of the robot 100. For example, the processor 140 may identify whether the elevator 200 has stopped based on an acceleration value of the elevator 200 obtained using an inertial measurement unit (IMU) sensor, an acceleration sensor, or the like. Specifically, when it is identified that the obtained acceleration value increases in the negative (-) direction and then decreases below a preset value, the processor 140 may identify that the elevator 200 has stopped.

When it is identified that the elevator 200 has stopped, the processor 140 may obtain Wi-Fi device identification information for one or more Wi-Fi devices connectable to the robot 100 through the first communication interface 120. Here, the Wi-Fi device identification information may be compiled into a Wi-Fi device list by the processor 140, where the Wi-Fi device list may includes identification information (and various information) about Wi-Fi devices in the vicinity of the robot 100, which are connectable to the robot 100 through Wi-Fi communication. For example, the Wi-Fi devices may include a Wi-Fi access point, a Wi-Fi router, or the like, as described above.

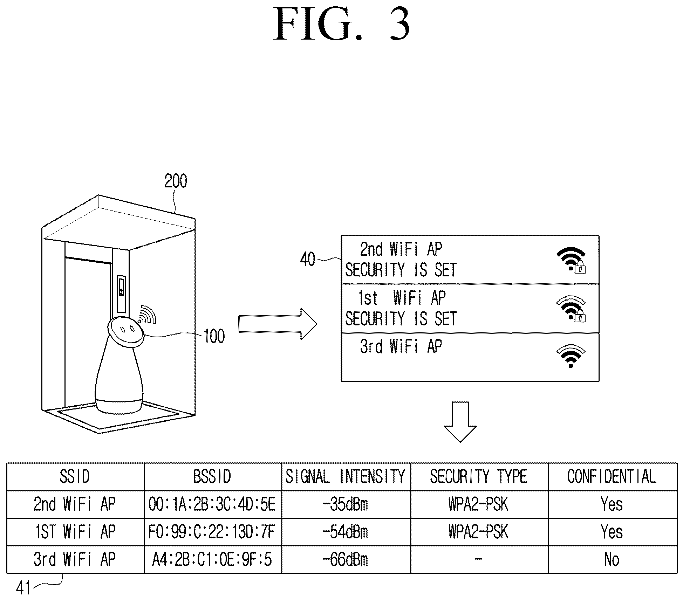

FIG. 3 is an exemplary view illustrating a Wi-Fi device list including identification information about a plurality of Wi-Fi devices connectable to a robot according to an embodiment.

The Wi-Fi device list 40 and 41 may include various information about the Wi-Fi devices as well as identification information about the plurality of Wi-Fi devices (e.g., the name, identifier, service set identifier (SSID), etc. set for the Wi-Fi devices).

For example, referring to FIG. 3, when the elevator 200 stops, the processor 140 may search for at least one Wi-Fi device that is connectable to the robot 100 at the current location of the robot 100 (or the floor on which the elevator 200 stopped), and obtain the Wi-Fi device list 40 that includes the at least one Wi-Fi device identified through the search. Subsequently, the processor 140 may obtain information about the identified at least one Wi-Fi device (e.g., information about the intensity of the Wi-Fi signal of the Wi-Fi device, information about the security protocol of the Wi-Fi device (e.g., WPA, WPA2, WEP, etc.), information about a password request (or certificate usage information) required to connect to the Wi-Fi device, etc.) from the at least one Wi-Fi device, and based on the information about the at least one Wi-Fi device, obtain Wi-Fi device detailed lists 40 and 41 that include detailed information about the at least one Wi-Fi device. The Wi-Fi device detailed lists 40 and 41 may include information about the intensity of the Wi-Fi signal of the Wi-Fi device, information about the security protocol of the Wi-Fi device (e.g., WPA, WPA2, WEP, etc.), information about a password request (or certificate usage information) required to connect to the Wi-Fi device, etc.

For convenience of explanation, FIG. 3 separately illustrates the Wi-Fi device list 40 including only information about the Wi-Fi device and the signal intensity and the Wi-Fi device detailed lists 40 and 41 including detailed information about the Wi-Fi device, but the present disclosure is not limited thereto. In other words, the Wi-Fi device list may be obtained in the form of a merge of the Wi-Fi device list 40 including only information about the Wi-Fi device and the signal intensity and the Wi-Fi device detailed lists 40 and 41 including detailed information about the Wi-Fi devices.

In particular, the processor 140 may obtain the Wi-Fi device lists 40 and 41 by sorting the identification information about the plurality of Wi-Fi devices based on the Wi-Fi signal intensity of the plurality of Wi-Fi devices. In one example, the processor 140 may obtain the Wi-Fi device lists 40 and 41 by sorting the identification information about the plurality of Wi-Fi devices in descending order of Wi-Fi signal intensity of the plurality of Wi-Fi devices.

Referring to the Wi-Fi device lists 40 and 41 illustrated in FIG. 3, the second Wi-Fi device, which has the strongest Wi-Fi signal intensity, is placed first in the Wi-Fi device lists 40 and 41, the first Wi-Fi device, which has the second strongest Wi-Fi signal intensity, is placed second in the Wi-Fi device lists 40 and 41, and the third Wi-Fi device, which has the third strongest Wi-Fi signal intensity, is placed third in the Wi-Fi device lists 40 and 41. In this way, the processor 140 may not only identify a plurality of Wi-Fi devices with Wi-Fi connectivity on the floor where the elevator 200 is currently located, but also identify the order of signal intensity of the plurality of Wi-Fi devices with Wi-Fi connectivity.

The processor 140 may obtain the Wi-Fi device lists 40 and 41 in real time while the elevator 200 is traveling. Accordingly, the processor 140 may identify that the elevator 200 has moved when at least one of the plurality of Wi-Fi devices included in the Wi-Fi device lists 40 and 41 changes, or when the order of the plurality of Wi-Fi devices changes. In addition, when it is identified that the elevator 200 is stopped, the processor 140 may use the Wi-Fi device lists 40 and 41 obtained while the elevator 200 is stopped to identify whether the elevator 200 has arrived at the second floor.

According to an embodiment, the processor 140 may identify whether the floor on which the elevator 200 is stopped is the second floor based on the Wi-Fi device lists 40 and 41 obtained while the elevator 200 is stopped.

Specifically, the processor 140 may identify that the Wi-Fi device lists 40 and 41 obtained while the elevator 200 is stopped include all of a plurality of Wi-Fi devices capable of Wi-Fi connectivity with the robot 100 set for the second floor. The plurality of Wi-Fi devices capable of Wi-Fi connectivity with the robot 100 set for the second floor may be a plurality of Wi-Fi devices capable of Wi-Fi connectivity with the robot 100 identified through the first communication interface 120 when the robot 100 is located on the second floor. In this case, the processor 140 may identify that the elevator 200 has stopped (or arrived) at the second floor when it is identified that the obtained Wi-Fi device lists 40 and 41 include all of the plurality of Wi-Fi devices capable of Wi-Fi connectivity with the robot 100 set for the second floor.

The memory of the robot 100 may store information about a plurality of Wi-Fi devices capable of Wi-Fi connectivity for each floor. In one example, the memory may store in advance information about Wi-Fi device lists 50 and 51 for each floor.

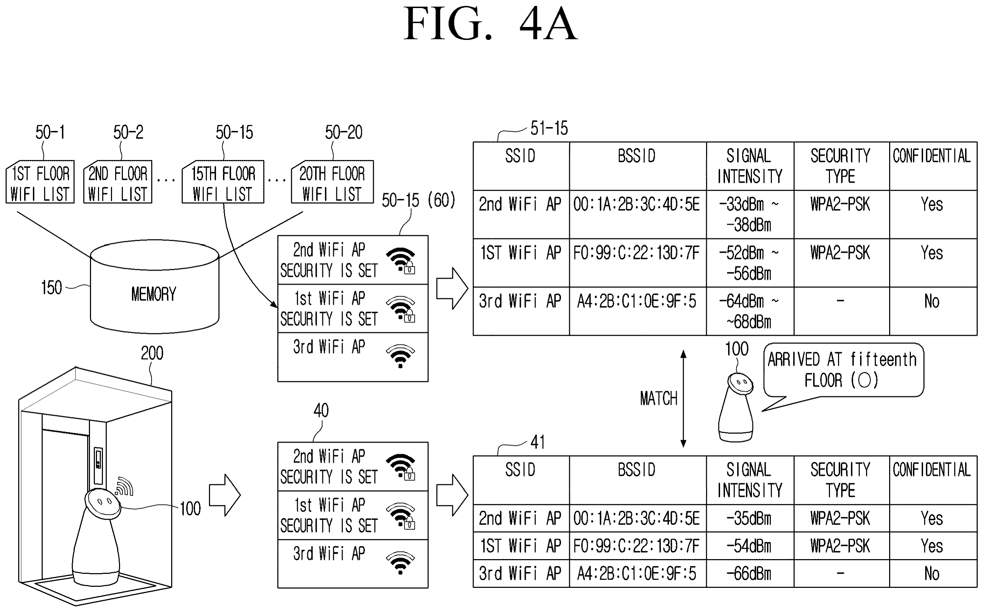

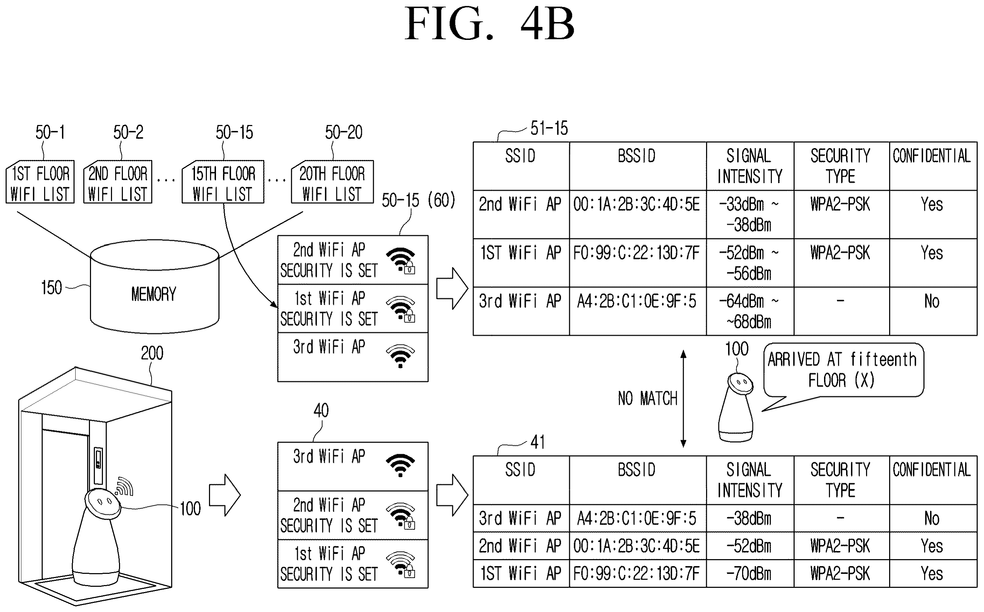

FIG. 4A and FIG. 4B are exemplary views illustrating a method for identifying a floor on which the elevator 200 is stopped by comparing obtained Wi-Fi device lists 40 and 41 with a Wi-Fi device list stored in a memory according to an embodiment.

Referring to FIG. 4A and FIG. 4B, a memory 150 may store information about Wi-Fi device lists 50 and 51 for each floor. Specifically, when the space in which the robot 100 is located consists of 20 floors, the memory 150 may store Wi-Fi device list information 50-1 to 50-20 (hereinafter, referred to as 50) that includes a plurality of Wi-Fi device information identified on each of the first to twentieth floors. In addition, the memory 150 may store in advance the Wi-Fi device list information 51 that includes detailed information about a plurality of Wi-Fi device information identified on each of the first to twentieth floors.

In this case, according to an embodiment, the processor 140 may identify that the floor on which the elevator 200 stopped is the second floor when the obtained Wi-Fi device lists 40 and 41 match Wi-Fi device list 60 of the second floor stored in the memory 150. Specifically, the processor 140 may select the Wi-Fi device list 60 corresponding to the second floor from the plurality of Wi-Fi device lists 50 stored in the memory 150. Subsequently, the processor may compare the Wi-Fi device lists 40 and 41 obtained in real time with the Wi-Fi device list 60 of the second floor stored in the memory 150 to identify whether the obtained Wi-Fi device lists 40 and 41 match the Wi-Fi device list 60 of the second floor stored in the memory 150.

In one example, when it is identified that the obtained Wi-Fi device lists 40 and 41 match a plurality of Wi-Fi devices included in the Wi-Fi device list 60 of the second floor stored in the memory 150, the processor 140 may identify that the obtained Wi-Fi device lists 40 and 41 match the Wi-Fi device list 60 of the second floor stored in the memory 150. In this case, the processor 140 may compare information about the plurality of Wi-Fi devices included in the obtained Wi-Fi device lists 40 and 41 with information about the plurality of Wi-Fi devices included in the Wi-Fi device list 60 of the second floor stored in the memory 150 to identify whether the obtained Wi-Fi device lists 40 and 41 match the Wi-Fi device list 60 of the second floor. In one example, the processor 140 may determine whether the signal intensity of each Wi-Fi device included in the obtained Wi-Fi device lists 40 and 41 matches the signal intensity of each Wi-Fi device included in the Wi-Fi device list 60 of the second floor stored in the memory 150. In particular, the signal intensity of the plurality of Wi-Fi devices included in the Wi-Fi device list 60 of the second floor (and the plurality of Wi-Fi device lists 50) stored in the memory 150 may each be set to a certain range. Accordingly, the processor 140 may determine whether the signal intensity of each of the Wi-Fi devices included in the obtained Wi-Fi device lists 40 and 41 falls within the range of the signal intensity of each of the Wi-Fi devices included in the Wi-Fi device list 60 of the second floor stored in the memory 150, and when it is determined that the signal intensity of each of the Wi-Fi devices included in the obtained Wi-Fi device lists 40 and 41 falls within the range of the signal intensity of each of the Wi-Fi devices included in the Wi-Fi device list 60 of the second floor stored in the memory 150, the processor 140 may determine that the obtained Wi-Fi device lists 40 and 41 match the Wi-Fi device list 60 of the second floor. In addition, the processor 140 may determine whether the obtained Wi-Fi device lists 40 and 41 match the Wi-Fi device list 60 of the second floor by comparing security types, whether a password is requested, and the like.

In particular, when it is identified that the placement order (or sort order) of the plurality of Wi-Fi devices in the respective Wi-Fi device lists (i.e., the obtained Wi-Fi device lists 40 and 41 and the Wi-Fi device list 60 of the second floor stored in the memory 150) matches, the processor 140 may identify the obtained Wi-Fi device lists 40 and 41 match the Wi-Fi device list 60 of the second floor stored in the memory 150. Here, the placement order of the plurality of Wi-Fi devices may be an order established based on the signal intensity of each Wi-Fi device, as described above.

In addition, when it is identified that the obtained Wi-Fi device lists 40 and 41 match the Wi-Fi device list 60 of the second floor stored in the memory 150, the processor 140 may identify that the elevator 200 has arrived at the second floor. On the other hand, when it is identified that the obtained Wi-Fi device lists 40 and 41 do not match the Wi-Fi device list of the second floor, the processor 140 may identify that the elevator 200 has not arrived at the second floor. In other words, the processor 140 may identify that the floor on which the elevator 200 has stopped is not the second floor.

Specifically, referring to FIG. 4A, when the robot 100 is set to move to the fifteenth floor in response to a user input, the processor 140 may obtain the Wi-Fi device lists 50-15 and 51-15 for the fifteenth floor from the plurality of Wi-Fi device list information stored in the memory 150 (i.e., the plurality of Wi-Fi list information corresponding to each of the plurality of floors) as the Wi-Fi device list 60 corresponding to the second floor. Subsequently, the processor 140 may compare the Wi-Fi device lists 40 and 41 obtained while the elevator 200 is stopped with the Wi-Fi device lists 50-15 and 51-15 for the fifteenth floor obtained from the memory 150 to identify whether the floor on which the elevator 200 is stopped corresponds to the fifteenth floor. The processor 140 may identify that both the obtained Wi-Fi device lists 40 and 41 and the Wi-Fi device lists 50-15 and 51-15 for the fifteenth floor obtained from the memory 150 include the first to third Wi-Fi devices.

In particular, the processor 140 may identify whether the obtained Wi-Fi device lists 40 and 41 match identification information (and security protocol information, password request information, etc.) of the plurality of Wi-Fi devices included in each of the Wi-Fi device lists 50-15 and 51-15 for the fifteenth floor obtained from the memory 150. In this case, when it is identified that the obtained Wi-Fi device lists 40 and 41 match identification information (and security protocol information, password request information, etc.) of the plurality of Wi-Fi devices included in each of the Wi-Fi device lists 50-15 and 51-15 for the fifteenth floor obtained from the memory 150, the processor 140 may identify that the elevator 200 has arrived at the fifteenth floor set by the user.

In addition, the processor 140 may identify whether the order of placement of the plurality of Wi-Fi devices in the obtained Wi-Fi device lists 40 and 41 matches the order of placement of the plurality of Wi-Fi devices in the Wi-Fi device lists 50-15 and 51-15 for the fifteenth floor. In this case, the processor 140 may identify that the first to third Wi-Fi devices are placed in the same order (i.e., the second Wi-Fi device, the first Wi-Fi device, and the third Wi-Fi device) in both the obtained Wi-Fi device lists 40 and 41 and the Wi-Fi device lists 50-15 and 51-15 for the fifteenth floor obtained from the memory 150, and identify that the elevator 200 has arrived at the fifteenth floor set by the user.

On the other hand, referring to FIG. 4B, the processor 140 may identify that the obtained Wi-Fi device lists 40 and 41 do not match the identification information (and security protocol information, password request information, etc.) of the plurality of Wi-Fi devices included in each of the Wi-Fi device lists 50-15 and 51-15 for the fifteenth floor obtained from the memory 150. In addition, the processor 140 may identify that the Wi-Fi device lists 50-15 and 51-15 for the fifteenth floor obtained from the memory 150 include a plurality of devices (first to third Wi-Fi devices) arranged in the order of second Wi-Fi device, first Wi-Fi device, and third Wi-Fi device, whereas the obtained Wi-Fi device lists 40 and 41 include a plurality of devices (first to third Wi-Fi devices) arranged in the order of third Wi-Fi device, second Wi-Fi device, and first Wi-Fi device. In other words, it is identified that although both the obtained Wi-Fi device lists 40 and 41 and the Wi-Fi device lists 50-15 and 51-15 for the fifteenth floor obtained from the memory 150 include the same Wi-Fi devices (first to third Wi-Fi devices), the plurality of Wi-Fi devices (first to third Wi-Fi devices) are arranged in a different order. Accordingly, the processor 140 may identify that the floor on which the elevator 200 is stopped is not the fifteenth floor set by the user.

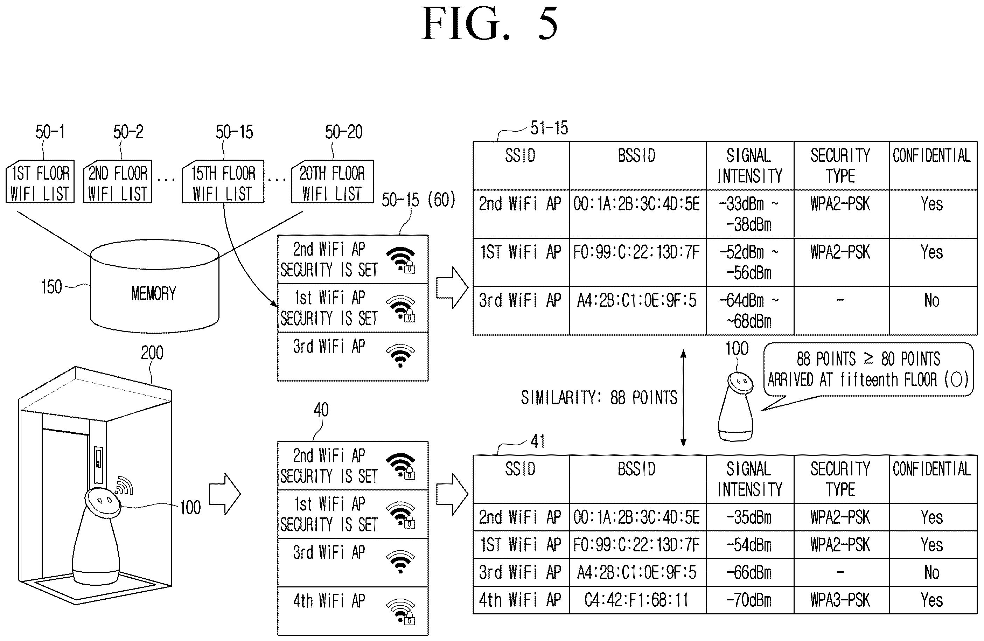

FIG. 5 is an exemplary view illustrating a method for identifying a floor on which the elevator 200 is stopped based on a similarity between the obtained Wi-Fi device lists 40 and 41 and the Wi-Fi device list of the second floor according to an embodiment.

According to an embodiment, when it is identified that the obtained Wi-Fi device lists 40 and 41 do not match the Wi-Fi device list of the second floor, the processor 140 may identify a similarity between the obtained Wi-Fi device lists 40 and 41 and the Wi-Fi device list of the second floor.

Here, the similarity may be a value (or score) calculated by comparing the identification information about the plurality of Wi-Fi devices included in each of the obtained Wi-Fi device lists 40 and 41 and the Wi-Fi device list of the second floor, the placement order of the plurality of Wi-Fi devices, and the Wi-Fi signal intensity information about each of the Wi-Fi devices (and the security protocol information about each of the Wi-Fi devices, the password request information required to connect to each of the Wi-Fi devices, and the like) to calculate how similar the Wi-Fi device lists 40 and 41 and the Wi-Fi device list of the second floor are. For example, the more identical the identification information about the plurality of Wi-Fi devices included in each of the obtained Wi-Fi device lists 40 and 41 and the Wi-Fi device list of the second floor and the more similar the order of placement of the plurality of Wi-Fi devices, the higher the similarity may be calculated. In this case, different weights may be applied to each of the factors for identifying similarity (the identification information about the plurality of Wi-Fi devices included in each of the lists, the placement order of the plurality of Wi-Fi devices, and the Wi-Fi signal intensity information about each Wi-Fi device).

In this case, when the calculated similarity is equal to or greater than a preset value, the processor 140 may identify that the floor on which the elevator 200 is stopped is the second floor. For example, with change in an environment (e.g., changes or additions of Wi-Fi devices) on the second floor or another floor adjacent to the second floor, the Wi-Fi device lists 40 and 41 obtained by the processor 140 in real time and the Wi-Fi device list 50 of the second floor stored in the memory 150 may differ. Accordingly, when the similarity is equal to or greater than a preset value, the processor 140 may identify that there is an environmental change on the second floor or another floor adjacent to the second floor and that the elevator 200 has arrived at the second floor.

Referring to FIG. 5, the processor 140 may obtain the Wi-Fi device lists 40 and 41 that include the first to fourth Wi-Fi devices while the elevator 200 is stopped. On the other hand, the Wi-Fi device lists 50-15 and 51-15 for the fifteenth floor obtained by the processor 140 from the memory 150 include the first to third Wi-Fi devices.

Accordingly, the processor 140 may identify the obtained Wi-Fi device lists 40 and 41 do not match the Wi-Fi device list 60 for the second floor, and may identify a similarity between the obtained Wi-Fi device lists 40 and 41 and the Wi-Fi device list for the fifteenth floor. In particular, the processor 140 may identify that the order of placement of the first to third Wi-Fi devices included in the obtained Wi-Fi device lists 40 and 41 matches the order of placement of the first to third Wi-Fi devices included in the Wi-Fi device list for the fifteenth floor. The processor 140 may also identify that the signal intensity of each of the first to third Wi-Fi devices included in the obtained Wi-Fi device lists 40 and 41 matches the signal intensity of each of the first to third Wi-Fi devices included in the Wi-Fi device list for the fifteenth floor. The processor 140 may calculate a score for the matching elements in the obtained Wi-Fi device lists 40 and 41 and the Wi-Fi device list for the fifteenth floor, respectively, and sum the respective calculated scores to yield a similarity score of 88. In this case, assuming a preset value of 80, the processor 140 may identify that the elevator 200 has arrived at the fifteenth floor even though the obtained Wi-Fi device lists 40 and 41 and the Wi-Fi device list for the fifteenth floor do not match.

Subsequently, the processor 140 may update the stored Wi-Fi device list 60 of the second floor to the obtained Wi-Fi device lists 40 and 41. In other words, the processor 140 may change the Wi-Fi device list 60 of the second floor stored in the memory 150 to the newly obtained Wi-Fi device lists 40 and 41 for the second floor based on the new environmental change. Referring back to FIG. 5, the processor 140 may update the Wi-Fi device lists 50-15 and 51-15 information for the fifteenth floor stored in the memory 150 to the obtained Wi-Fi device lists 40 and 41.

According to an embodiment, when it is identified that the elevator 200 is stopped on the second floor, the processor 140 may identify whether a door of the elevator 200 is opened based on a received signal strength indicator (RSSI) value of a signal received through the second communication interface 130. Here, the signal received through the second communication interface 130 may be an RF signal. The processor 140 may identify an RSSI value of the RF signal received through the second communication interface 130, and may identify whether a door of the elevator 200 arriving at the second floor is opened based on the identified RSSI value of the RF signal.

Specifically, when the RSSI value of the received RF signal (specifically, the RF signal received through the second communication interface 130) increases while the elevator 200 is stopped upon arrival at the second floor, the processor 140 may identify that the door of the elevator 200 is opened. To this end, the processor 140 may identify whether the RSSI value of the RF signal is equal to or greater than a preset value. In addition, when the RSSI value of the RF signal received through the second communication interface 130 decreases after the robot 100 boards the elevator 200, the processor 140 may identify that the door of the elevator 200 is closed. To this end, the processor 140 may identify whether the RSSI value of the RF signal is below a preset value. In this case, the preset value for determining whether the door of the elevator 200 is opened and the preset value for determining whether the door of the elevator 200 is closed may be set to different values, and may be set based on the RSSI value of the RF signal identified while the elevator 200 is traveling and the RSSI value of the RF signal identified before boarding the elevator 200, respectively.

For example, the processor 140 may identify the RSSI value of the RF signal received through the second communication interface 130 before the robot 100 boards the elevator 200. In addition, the processor 140 may set the preset value (hereinafter, referred to as a preset first value) to be a magnitude of a preset ratio (e.g., 0.5) of the RSSI value of the RF signal identified before the robot 100 boards the elevator 200. Subsequently, the processor 140 may monitor the RSSI value of the RF signal received through the second communication interface 130 in real time after the robot 100 boards the elevator 200. In this case, when the RSSI value of the RF signal decreases below the preset first value (or when the amount of change in the RSSI value of the RF signal is below a preset second value), the processor 140 may identify that the door of the elevator 200 is closed. In addition, when it is identified that the door of the elevator 200 is closed, the processor 140 may identify the RSSI value of the RF signal received through the second communication interface 130.

In addition, the processor 140 may set the preset value (hereinafter, referred to as a preset third value) to be a magnitude of a preset ratio (e.g., 1.5) of the RSSI value of the RF signal identified by the robot 100 after the door of the elevator 200 is closed. Subsequently, the processor 140 may monitor the RSSI value of the RF signal received through the second communication interface 130 in real time while the elevator 200 is traveling. In this case, when the RSSI value of the RF signal increases above the preset third value (or when the amount of change in the RSSI value of the RF signal is above a preset fourth value), the processor 140 may identify that the door of the elevator 200 is opened.

When a plurality of RF signals are received through the second communication interface 130, the processor 140 may identify whether the door of the elevator 200 is opened or not using only the RSSI value for the RF signal with the greatest signal intensity among the plurality of RF signals.

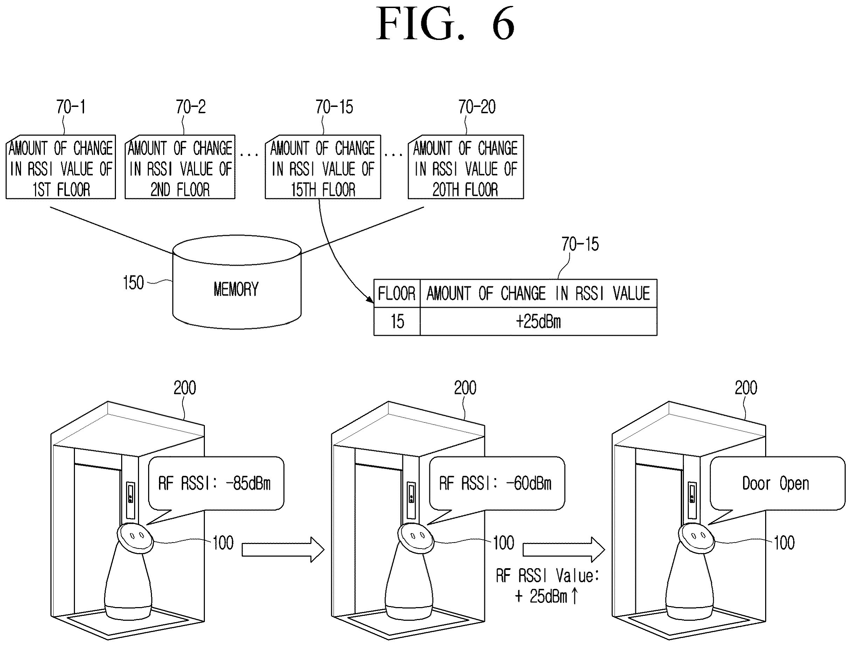

FIG. 6 is an exemplary view illustrating a method for identifying whether the door of the elevator 200 is opened based on information about an amount of change in an RSSI value in response to opening or closing of the door of the elevator 200 for each floor stored in the memory 150 according to an embodiment.

According to an embodiment, the memory 150 may further store information about the amount of change of the RSSI value of the RF signal in response to the opening or closing of the door of the elevator 200 for each floor. In this case, the processor 140 may determine whether the door of the elevator 200 is opened or closed based on the information about the amount of change of the RSSI value of the RF signal in response to the opening or closing of the door of the elevator 200 for each floor stored in the memory.

Specifically, the processor 140 may identify the amount of change in the RSSI value of the RF signal received through the second communication interface 130 each time the door of the elevator 200 is opened while the robot 100 is boarding the elevator 200, and may store information about the identified amount of change in the RSSI value of the identified RF signal in the memory 150 in advance. In particular, the processor 140 may identify the amount of change in the RSSI value of the RF signals received inside the elevator 200 when the door of the elevator 200 is opened on a plurality of floors constituting the space where the robot 100 is located. Accordingly, the processor 140 may obtain information about the amount of change in the RSSI value of the RF signal in response to opening or closing of the door of the elevator 200 on each floor, and may store the obtained information (specifically, the amount of change in the RSSI value of the RF signal in response to opening or closing of the door of the elevator 200 on each floor) in the memory 150 in advance.

In this case, when a plurality of RF signals are received through the second communication interface 130, the processor 140 may sort the information about the amount of change in the RSSI value for the plurality of RF signals according to the intensity (i.e., the magnitude of the RSSI value) of the plurality of RF signals and store the sorted information about the amount of change in the RSSI value in the memory 150 for each floor. Alternatively, the processor 140 may store in the memory 150 only the change in RSSI value information for the RF signal having the greatest signal intensity (i.e., the largest RSSI value) of the plurality of RF signals. Hereinafter, for convenience of explanation, it will be described that as one RF signal is received through the second communication interface 130, only information about the RSSI value for the one RF signal received at each floor is stored in the memory 150.

When the elevator 200 is stopped, the processor 140 may detect an amount of change in the RSSI value of the signal received through the second communication interface 130, and when the detected amount of change in the RSSI value matches the amount of change in the RSSI value of the second floor stored in the memory 150, the processor may identify that the door of the elevator 200 is opened. Specifically, when the elevator is stopped upon arrival at the second floor, the processor 140 may detect the amount of change in the RSSI value of the RF signal received through the second communication interface 130. In addition, the processor 140 may obtain information about the amount of change in the RSSI value corresponding to the second floor (i.e., information about the amount of change in the RSSI value of the RF signal in response to opening or closing of the elevator 200 at the second floor) among information about the amount of change in a plurality of RSSI values stored in the memory 150. Subsequently, the processor 140 may identify whether the door of the elevator 200 is opened by comparing the information about the amount of change in the RSSI value corresponding to the second floor obtained from the memory 150 with the detected amount of change in the RSSI value of the RF signal.

When it is identified that the information about the amount of change in the RSSI value corresponding to the second floor obtained from the memory 150 and the detected amount of change in the RSSI value of the RF signal matches or has an error value within a preset range, the processor 140 may identify that the door of the elevator 200 arriving at the second floor is opened.

Specifically, referring to FIG. 6, the memory 150 may store information about the amount of change in the RSSI value identified inside the elevator 200 at each of the first to twentieth floors. In particular, after the elevator 200 is stopped on each floor (i.e., the first to twentieth floors), the memory 150 may store information about an RSSI value of the RF signal identified with the door of the elevator 200 closed, an RSSI value of the RF signal identified with the door open, and an amount of change in the RSSI value in response to opening or closing of the door.

When the robot 100 is set to move to the fifteenth floor in response to a user input, the processor 140 may obtain information about an amount of change in the RSSI value of the RF signal for the fifteenth floor among information about an amount of change in the RSSI value of a plurality of RF signals stored in the memory 150 (specifically, information about an amount of change in the RSSI value of the RF signal in response to opening or closing of the elevator 200 for each floor). In addition, the processor 140 may identify the RSSI value of the signal received through the second communication interface 130 while the elevator 200 is stopped on the fifteenth floor, and detect the amount of change in the identified RSSI value. In this case, when it is identified that the detected amount of change in the RSSI value is (-) 25 dBm, which is consistent with the information about the amount of change in the RSSI value of the RF signal for the fifteenth floor, the processor 140 may identify that the door of the elevator 200 arriving at the fifteenth floor is opened.

When it is identified that the door of the elevator 200 is opened, the processor 140 may control the driver 110 to cause the robot 100 to exit the elevator 200. In other words, the processor 140 may control the driver 110 to cause the robot 100 to exit the elevator 200 upon arrival at the second floor.

The processor 140 may identify the number of floors traveled by the elevator using a sensor of the robot 100, and identify whether the elevator 200 has arrived at the second floor set by the user based on the number of floors traveled. In particular, since it takes certain time to obtain the Wi-Fi device lists 40 and 41, the Wi-Fi device lists obtained by the processor 140 may not accurately reflect Wi-Fi device information for the floors on which the elevator 200 is located. In other words, the Wi-Fi device lists 40 and 41 obtained by the processor 140 may not accurately match the floors on which the elevator 200 travels. Accordingly, the processor 140 may obtain sensing information about the moving elevator 200 using a sensor of the robot 100 in real time to identify the location of the moving elevator 200. Hereinafter, an embodiment of the present disclosure in this regard will be described.

According to an embodiment, the robot 100 may further include an IMU sensor. In this case, the processor 140 may identify an inter-floor travel time based on a sensing value obtained through the IMU sensor while the elevator 200 is traveling. The IMU sensor may include an acceleration sensor, an angular velocity sensor, and a geomagnetic sensor. In this case, the processor 140 may obtain an acceleration value of the elevator 200 through the acceleration sensor of the IMU sensor. The processor 140 may identify an inter-floor travel time of the elevator 200 based on the acceleration value obtained through the IMU sensor.

Specifically, the processor 140 may identify a first time point at which the elevator 200 begins to accelerate based on the acceleration value obtained through the IMU sensor. In addition, the processor 140 may identify a second time point at which the elevator 200 began to decelerate based on the obtained sensing value. In other words, the processor 140 may identify a time point at which the elevator 200 begins to decelerate before the elevator 200 is stopped as the second time point.

Further, the processor 140 may identify an inter-floor travel time of the elevator 200 based on the first and second time points. For example, the processor 140 may identify the time taken from the second time point to the first time point as the inter-floor travel time of the elevator 200. In particular, since the inter-floor travel time of the elevator 200 is identified based on the second time point at which the elevator 200 is identified as having begun to decelerate, the processor 140 may identify the inter-floor travel time of the elevator 200 before the elevator 200 is stopped.

When it is identified that the elevator 200 has moved from the first floor to the second floor based on the identified inter-floor travel time, the processor 140 may identify whether the floor on which the elevator 200 is stopped is the second floor based on the obtained Wi-Fi device lists 40 and 41. Specifically, when the inter-floor travel time identified based on the IMU sensor and the travel time required to travel from the first floor to the second floor matches or has an error value within a preset range, the processor 140 may identify that the elevator 200 has moved from the first floor to the second floor.

In addition, the processor 140 may identify whether the elevator 200 is stopped based on the sensing value obtained through the IMU sensor. For example, when it is identified that the sensing value obtained through the IMU sensor decreases in the (-) direction and reaches zero, the processor 140 may identify that the elevator 200 is stopped. Subsequently, the processor 140 may obtain the Wi-Fi device lists 40 and 41 that include identification information about a plurality of Wi-Fi devices connectable to the robot 100 through the first communication interface 120 while the elevator 200 is stopped. In particular, the processor 140 may identify the floor on which the elevator 200 is stopped more accurately by identifying that the elevator 200 has moved from the first floor to the second floor using the inter-floor travel time identified based on the IMU sensor and then, identifying whether the floor on which the elevator 200 is stopped is the second floor once again using the Wi-Fi device lists 40 and 41 obtained based on the first communication interface 120.

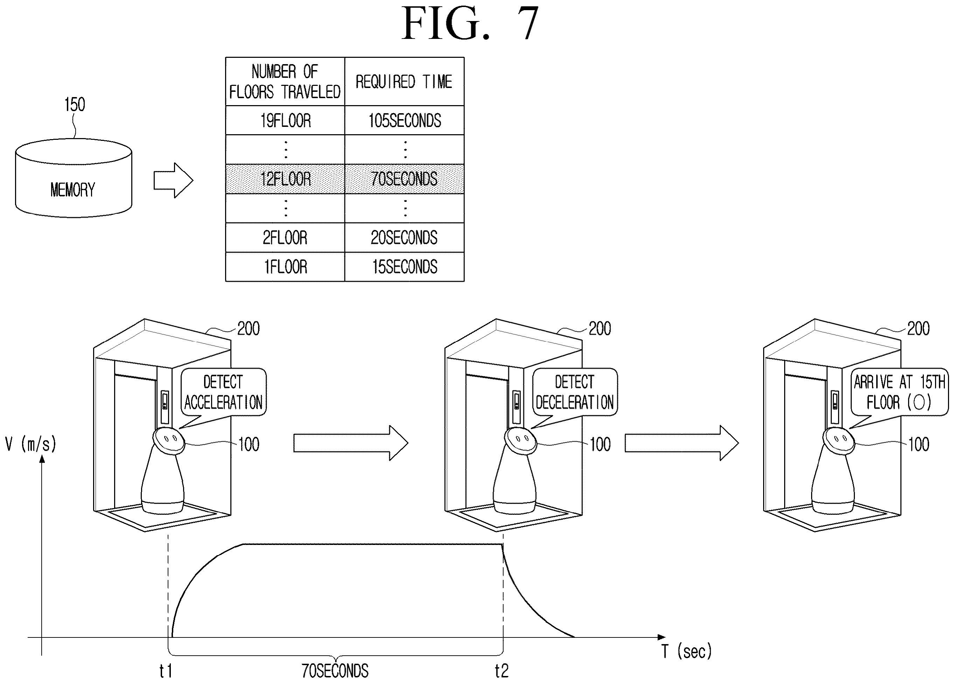

FIG. 7 is an exemplary view illustrating a method for identifying floors traveled by the elevator 200 based on inter-floor travel time information stored in the memory 150 according to an embodiment.

In addition, according to an embodiment, the memory 150 may store inter-floor travel time information. Here, the inter-floor travel time may be a travel time based on the number of floors traveled by the elevator 200. To this end, the processor 140 may measure the time taken by the elevator 200 to travel a plurality of floors constituting the space where the robot 100 is located while the robot 100 is boarding the elevator, based on the number of floors traveled by the elevator 200. Further, the processor 140 may store in advance the inter-floor travel time information in the memory 150 based on the measured time.

Subsequently, the processor 140 may identify an estimated travel time from the first floor to the second floor based on the inter-floor travel time information stored in the memory 150. In addition, when the identified inter-floor travel time matches the estimated travel time, the processor 140 may identify that the elevator 200 has traveled from the first floor to the second floor.

For example, referring to FIG. 7, the memory 150 may store information about the travel time taken by the elevator 200 to travel one floor to the travel time taken to travel 19 floors. The inter-floor travel time may be the time taken from the time point when the elevator 200 begins to accelerate to the time point when the elevator begins to decelerate. In this case, the time taken from the time point when the elevator 200 begins to accelerate to the time point when the elevator begins to decelerate may be identified based on the sensing value obtained through the IMU sensor, respectively. In this regard, since the above description is applied in the same manner, detailed description thereof will be omitted.

When the robot 100 is set to move to the fifteenth floor in response to a user input, the processor 140 may identify an estimated travel time of the elevator 200 from the floor where the robot 100 is located to the fifteenth floor. The processor 140 may identify the floor on which the robot 100 is located based on the Wi-Fi device lists 40 and 41 or map data utilized by the robot 100. When it is identified that the floor on which the robot 100 is located is the third floor, the processor 140 may identify a travel tome for the elevator 200 to travel (i.e., estimated travel time) to the fifteenth floor set by the user. In particular, the processor 140 may obtain travel time information for the 12th floor (i.e., fifteenth floor - third floor) among the inter-floor travel time information stored in the memory 150, and may identify that the estimated travel time for the elevator 200 to travel the 12th floor is 70 seconds based on the obtained travel time information.

In addition, the processor 140 may identify the time taken by the elevator 200 from the time point at which the elevator 200 begins to accelerate to the time point at which the elevator begins to decelerate based on the sensing value obtained through the IMU sensor after the robot 100 boards the elevator 200 as the inter-floor travel time. In this case, when it is identified that the inter-floor travel time is 70 seconds, which is consistent with the estimated travel time, the processor 140 may identify that the elevator 200 has traveled from the third floor to the fifteenth floor. Subsequently, when the elevator 200 is stopped, the processor 140 may obtain the Wi-Fi device lists 40 and 41 based on the first communication interface 120, and may once again identify whether the floor on which the elevator 200 is stopped is the second floor based on the obtained Wi-Fi device lists 40 and 41.

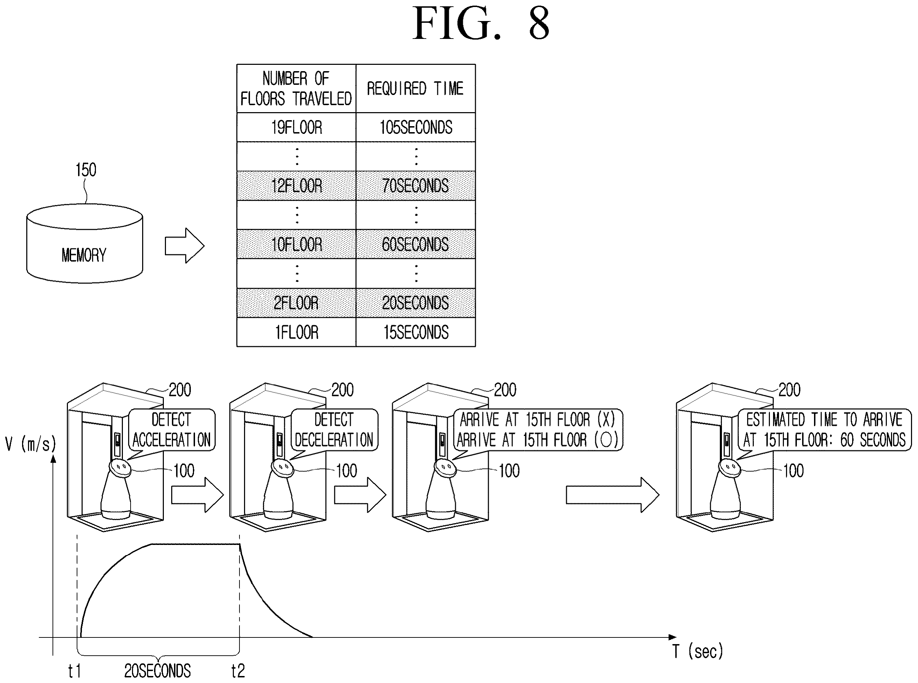

FIG. 8 is an exemplary view illustrating a method for, when it is identified that identified inter-floor travel time does not match estimated travel time, re-identifying a floor to which the elevator 200 has moved according to an embodiment.

According to an embodiment, when the identified inter-floor travel time does not match the estimated travel time, the processor 140 may initialize the IMU sensor. In other words, when the identified inter-floor travel time does not match the estimated travel time, the processor 140 may identify that the elevator 200 did not travel from the first floor to the second floor, and may initialize the IMU sensor. This is to remove any accumulated error in the IMU sensor.

The processor 140 may identify the third floor on which the elevator 200 is stopped based on the inter-floor travel time information stored in the memory 150 and the identified inter-floor travel time.

Specifically, the processor 140 may identify an inter-floor travel time having the travel time that matches the identified inter-floor travel time among the inter-floor travel time information. For example, referring to FIG. 8, the robot 100 is set to travel to the fifteenth floor in response to a user input, and the travel time identified through the IMU sensor is 20 seconds, which is different from the estimated travel time for the elevator 200 to travel from the third floor where the robot 100 was located to the fifteenth floor (i.e., the estimated travel time for the 12 floors) (70 seconds). In this case, the processor 140 may identify the travel time information corresponding to the 20 seconds among the inter-floor travel time information stored in the memory 150. Here, the processor 140 may identify that the travel time between two floors is 20 seconds and accordingly, the processor 140 may identify that the elevator 200 traveled to the fifth floor instead of the fifteenth floor. In addition, the processor 140 may identify an estimated travel time for the elevator 200 to travel from the fifth floor to the fifteenth floor. In other words, based on the inter-floor travel time information stored in the memory 150, the processor 140 may identify the travel time of the ten floors as the estimated travel time.

When the elevator 200 moves again, the processor 140 may re-identify the inter-floor travel time based on the sensing value obtained through the initialized IMU sensor. Based on the re-identified inter-floor travel time, the processor 140 may identify whether the elevator 200 traveled from the third floor to the second floor. Specifically, the processor 140 may identify whether the elevator 200 traveled from the fifth floor to the fifteenth floor by identifying whether the re-identified inter-floor travel time matches the identified travel time (i.e., estimated travel time) of the ten floors.

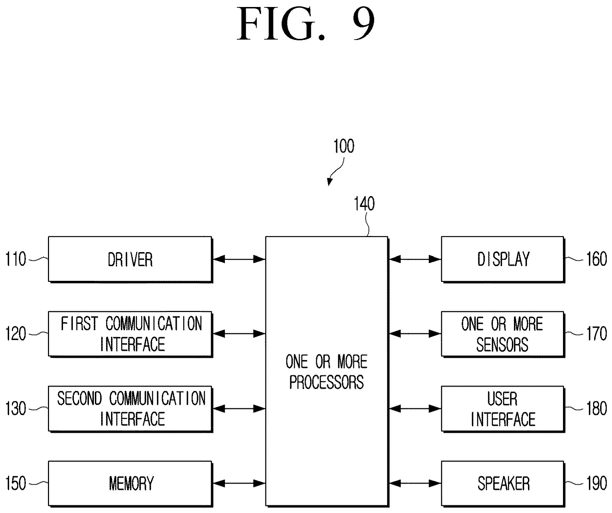

FIG. 9 is a detailed block diagram of the robot 100 according to an embodiment.

Referring to FIG. 9, the robot 100 includes the driver 110, the first communication interface 120, the second communication interface 130, the memory 150, a display 160, one or more sensors 170, an input interface 180, a speaker 190, and the processor 140. The configurations shown in FIG. 9 that are redundant of the configurations shown in FIG. 2 will not be described in detail.

The memory 150 according to an embodiment may store at least one instruction for the robot 100. In addition, the memory 150 may store an operating system (O/S) for driving the robot 100. Further, the memory 150 may store various software programs or applications for operating the robot 100 according to various embodiments. In particular, the memory 150 may store Wi-Fi device list information for each floor, information about an amount of change in the RSSI value in response to opening or closing of the door of the elevator 200 for each floor, and information about inter-floor travel time.

The memory embedded in the robot 100 may be implemented as at least one of a volatile memory (e.g. a dynamic RAM (DRAM), a static RAM (SRAM), or a synchronous dynamic RAM (SDRAM)), a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g. a NAND flash or a NOR flash), a hard drive, or a solid state drive (SSD)).

In addition, the memory detachable from the robot 100 may be implemented in the form of a memory card (e.g., a compact flash (CF), a secure digital (SD), a micro secure digital (Micro-SD), a mini secure digital (Mini-SD), an extreme digital (xD), or a multi-media card (MMC)), an external memory connectable to a USB port (e.g., a USB memory), or the like.

According to an embodiment, the memory 150 may store information regarding a plurality of neural networks (or artificial intelligence). Here, storing information regarding a neural network model may mean storing various information related to the operation of the neural network model, such as information regarding at least one layer included in the neural network model, information regarding parameters, biases, etc. utilized by each of the at least one layer, and the like. It should be appreciated, however, that depending on the implementation of the processor 140, information regarding the neural network model may be stored in the internal memory of the processor 140. For example, if the processor 140 is implemented as dedicated hardware, the information regarding the neural network model may be stored in the internal memory of the processor 140.

The display 160 may display various visual information. For example, the display 160 may display various information about map data, a traveling path of the robot 100, an exit floor set for the robot 100, and the like.

To this end, the display 160 may be implemented as the display 160 including a self-light emitting device or the display 160 including a non-light emitting device and a backlight. For example, the display 160 may be implemented as various types of displays 160 such as liquid crystal display (LCD), organic light emitting diodes (OLED) display, Light Emitting Diodes (LED), micro LED, Mini LED, Plasma Display Panel (PDP), Quantum dot (QD) display, a quantum dot light-emitting diode (QLED) display, and the like.

The display 160 may also include a driving circuit that can be implemented in the form of Amorphous Silicon Thin-Film Transistor (a-si TFT), low temperature poly silicon Thin-Film Transistor (LTPS TFT), Organic Thin-Film Transistor (OTFT), etc., a backlight unit, etc. The display 160 may be implemented as a touch screen combined with a touch sensor, a flexible display, a rollable display, a 3D display, a display in which a plurality of display modules are physically connected, etc.

When the display 160 is implemented as a touch screen, the display 160 may function as an output unit that outputs information between the robot 100 and a user and at the same time, may function as an input unit that provides the input interface 180 between the robot 100 and the user. In an example, the display 160 may receive a user input to move the robot 100 to the second floor.

The one or more sensors 170 according to an embodiment may include an IMU sensor. In this case, the processor 140 may use the IMU sensor to obtain an acceleration value of the elevator 200.

In addition, the one or more sensors 170 include a lidar sensor, a ToF sensor, and the like, and may obtain information about an object in the vicinity of the robot 100.

The input interface 180 is configured to be used by the robot 100 to interact with a user, and the processor 140 may receive various information such as control information for the robot 100, information about a space where the robot 100 is located (e.g., map data for the space, etc.), and the like through the input interface 180. In one example, the processor 140 may receive a user input to move the robot 100 to the second floor through the input interface 180. The user interface may include, but is not limited to, at least one of a touch sensor, a motion sensor, a button, a jog dial, or a switch.

The speaker 190 may output an acoustic signal to the outside of the robot 100. The speaker 190 may output multimedia playback, recording playback, various notification sounds, voice messages, etc. The robot 100 may include an audio output device such as the speaker 190, but may also include an output device such as an audio output terminal. In particular, the speaker 190 may provide obtained information, information processed and produced based on the obtained information, response results or operation results regarding a user voice, etc. in the form of voice. In one example, when it is identified that the elevator 200 has arrived at the second floor or the robot 100 fails to exit, the processor 140 may output a notification sound or a warning sound to alert the robot 100 to exit through the speaker 190.

The robot 100 may further include a microphone. The microphone may receive an acoustic signal in the vicinity of the robot 100. In one example, the microphone may receive a user voice for controlling the robot 100. Here, the user voice may be a user voice to move the robot 100 to the second floor.

When a user voice to execute a specific function is received through the microphone, the processor 140 may convert the user voice into a digital signal through a speech to text (STT) algorithm and provide response information corresponding to the user voice.

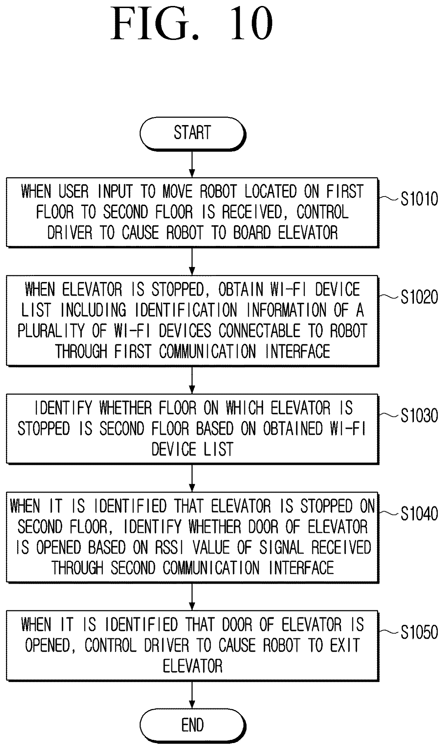

FIG. 10 is a flowchart illustrating a method of controlling a robot according to an embodiment.

In controlling the robot according to an embodiment, when a user input to move the robot located on the first floor to the second floor is input, the processor 140 may control the driver 110 to cause the robot to board the elevator 200 (S1010).

When the elevator 200 is stopped, the processor 140 may obtain the Wi-Fi device lists 40 and 41 including identification information about a plurality of Wi-Fi devices connectable to the robot through the first communication interface 120 (S1020).

Subsequently, based on the obtained Wi-Fi device lists 40 and 41, the processor 140 may identify whether the second floor is the floor on which the elevator 200 stopped (S1030).

In one example, the processor 140 may obtain the Wi-Fi device list of the second floor from the Wi-Fi device list information for each floor stored in the memory. In particular, the Wi-Fi device list may include identification information about a plurality of Wi-Fi devices sorted according to the Wi-Fi signal intensity of the plurality of Wi-Fi devices.

Subsequently, the processor 140 may compare the obtained Wi-Fi device lists 40 and 41 with the stored Wi-Fi device list 60 of the second floor. In particular, the processor 140 may compare identification information about the plurality of Wi-Fi devices included in the obtained Wi-Fi device lists 40 and 41 and the Wi-Fi device list 60 of the second floor stored in the memory 150, respectively, and the sort order of the plurality of Wi-Fi devices to identify whether the obtained Wi-Fi device lists 40 and 41 and the stored Wi-Fi device list 60 of the second floor match.

When the obtained Wi-Fi device lists 40 and 41 and the stored Wi-Fi device list 60 of the second floor match, the processor 140 may identify that the floor on which the elevator 200 is stopped is the second floor.

In this case, in one example, when it is identified that the obtained Wi-Fi device lists 40 and 41 and the Wi-Fi device list 60 of the second floor do not match, the processor 140 may identify a similarity between the obtained Wi-Fi device lists 40 and 41 and the Wi-Fi device list 60 of the second floor, and when the similarity is equal to or greater than a preset value, the processor 140 may identify that the floor on which the elevator 200 is stopped is the second floor. In addition, the processor 140 may update the stored Wi-Fi device list 60 of the second floor to the obtained Wi-Fi device lists 40 and 41.

When it is identified that the elevator 200 is stopped on the second floor, the processor 140 may identify whether the door of the elevator 200 is opened based on the RSSI value of the signal received through the second communication interface 130 (S1040).

Specifically, when the RSSI value of the signal received through the second communication interface increases above a preset value, the processor 140 may identify that the door of the elevator is opened.

The memory 150 may further store information about the amount of change in the RSSI value in response to opening or closing of the door of the elevator 200 for each floor. In this case, the processor 140 may determine whether the door of the elevator 200 is opened or closed based on the information about the amount of change in the RSSI value of the RF signal in response to opening or closing of the door of the elevator 200 for each floor stored in the memory. Specifically, when the elevator 200 is stopped, the processor 140 may detect the amount of change in the RSSI value of the signal received through the second communication interface 130, and obtain the amount of change in the RSSI value of the second floor among the information about the amount of change in the RSSI value in response to opening or closing of the door of the elevator 200 for each floor stored in the memory. Subsequently, when the detected amount of change in the RSSI value and the amount of change in the RSSI value of the second floor match, the processor 140 may identify that the door of the elevator 200 is opened.

When it is identified that the door of the elevator 200 is opened, the processor 140 may control the driver 110 to cause the robot to exit the elevator 200 (S1050).

According to an embodiment, while the elevator 200 is traveling, the processor 140 may obtain a sensing value obtained through the IMU sensor and identify an inter-floor travel time based on the obtained sensing value.

In particular, the processor 140 may identify a first time point at which the elevator 200 begins to accelerate and a second time point at which the elevator 200 begins to decelerate based on the obtained sensing value. In addition, the processor 140 may identify an inter-floor travel time of the elevator 200 based on the first and second time points.

The processor 140 may identify whether the elevator 200 has traveled from the first floor to the second floor based on the identified inter-floor travel time.

Specifically, the processor 140 may identify an estimated travel time from the first floor to the second floor based on the inter-floor travel time information stored in the memory. When the identified inter-floor travel time matches the estimated travel time, the processor 140 may identify that the elevator 200 has traveled from the first floor to the second floor.

When the identified inter-floor travel time does not match the estimated travel time, the processor 140 may initialize the IMU sensor, and identify the third floor on which the elevator 200 is stopped based on the inter-floor travel time information and the identified inter-floor travel time. Subsequently, when the elevator 200 moves again, the processor 140 may re-identify the inter-floor travel time based on the sensing value obtained through the initialized IMU sensor. In addition, the processor 140 may identify whether the elevator 200 has traveled from the third floor to the second floor based on the re-identified inter-floor travel time.

When it is identified that the elevator 200 has traveled from the first floor to the second floor, the processor 140 may identify that the second floor is the floor on which the elevator 200 stopped based on the obtained Wi-Fi device lists 40 and 41.

The methods according to the above-described various embodiments of the disclosure may be implemented in the form of an application which may be installed in the existing robot. Alternatively, the methods according to the above-described various embodiments may be performed using a neural network trained based on deep learning (or deep learned neural network), that is, a learning network model. Alternatively, the methods according to the above-described various embodiments may be implemented only by software upgrade or hardware upgrade of the existing robot. Alternatively, the above-described various embodiments may be performed through an embedded server included in the robot, or an external server of the robot.

According to an embodiment, the above-described various embodiments may be implemented in software including an instruction stored in a machine-readable storage medium that can be read by a machine (e.g., a computer). The machine may be a device that invokes the stored instruction from the storage medium and be operated based on the invoked instruction, and may include a robot according to embodiments. In case that the instruction is executed by the processor 140, the processor 140 may directly perform a function corresponding to the instruction using other components under the control of the processor 140. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

Further, according to an embodiment, methods according to various embodiments described above may be provided in a computer program product. The computer program product is a commodity and may be traded between a seller and a buyer. The computer program product may be distributed in the form of a device-readable storage medium (e.g., compact disc read only memory (CD-ROM)) or online through an application store (e.g., PlayStore^{™}). In the case of online distribution, at least a portion of the computer program product may be stored, or at least temporarily generated, in a storage medium, such as a manufacturer's server, an application store's server, or the memory of a relay server.

In addition, each of the components (e.g., modules or programs) according to the various embodiments may consist of a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before being integrated in the same or similar manner. Operations performed by modules, programs or other components according to the various embodiments may be executed in a sequential manner, a parallel manner, an iterative manner or a heuristic manner, and at least some of the operations may be performed in a different order or be omitted, or other operations may be added.

Hereinabove, although various embodiments of the present disclosure have been shown and described above, the disclosure is not limited to the specific embodiments described above, and various modifications may be made by one of ordinary skill in the art without departing from the spirit of the disclosure as claimed in the claims, and such modifications are not to be understood in isolation from the technical ideas or prospect of the disclosure.

## Claims

1. A robot comprising:
a driver;
a first communication interface;
a second communication interface;
at least one memory storing one or more instructions; and
one or more processors configured to execute the one or more instructions,
wherein the one or more instructions, when executed by the one or more processors, are configured to cause the robot to:
based on receiving an instruction to move the robot to a second floor from a first floor, control the driver to cause the robot to board an elevator,
based on identifying that the elevator is stopped, obtain through the first communication interface Wi-Fi device identification information for one or more Wi-Fi devices,
identify whether a floor on which the elevator is stopped is the second floor based on the obtained Wi-Fi device identification information,
based on identifying that the elevator is stopped on the second floor, identify whether a door of the elevator is open based on a received signal strength indicator (RSSI) value of a signal received through the second communication interface, and
based on identifying that the door of the elevator is open, control the driver to cause the robot to get off the elevator.

2. The robot of claim 1,
wherein the at least one memory stores Wi-Fi device identification information for a plurality of floors, wherein the plurality of floors includes the first floor and the second floor, and
wherein the one or more instructions, when executed by the one or more processors, are further configured to cause the robot to, based on identifying that the obtained Wi-Fi device identification information matches the stored Wi-Fi device identification information for the second floor, identify that the floor on which the elevator is stopped is the second floor.

3. The robot of claim 2,
wherein the obtained Wi-Fi device identification information comprises respective Wi-Fi signal intensities of each of the one or more Wi-Fi devices,
wherein the stored Wi-Fi device identification information comprises respective Wi-Fi signal intensities of each of one or more Wi-Fi devices located on the plurality of floors, and
wherein the one or more instructions, when executed by the one or more processors, are further configured to cause the robot to:
obtain a first sorting order of the one or more Wi-Fi devices based on the respective Wi-Fi signal intensities,
obtain a second sorting order of one or more Wi-Fi devices located on the second floor based on the stored Wi-Fi device identification information of the second floor, and
identify whether the obtained Wi-Fi device identification information matches the stored Wi-Fi device identification information for the second floor by comparing the first sorting order and the second sorting order.

4. The robot of claim 3, wherein the one or more instructions, when executed by the one or more processors, are further configured to cause the robot to:
based on identifying that the obtained Wi-Fi device identification information does not match the stored Wi-Fi device identification information for the second floor, identify a similarity value between the obtained Wi-Fi device identification information and the stored Wi-Fi device identification information for the second floor, and
based on the similarity value being equal to or greater than a preset value, identify that the floor on which the elevator is stopped is the second floor, and update the stored Wi-Fi device identification information for the second floor to the obtained Wi-Fi device identification information.

5. The robot of claim 2, wherein the one or more instructions, when executed by the one or more processors, are further configured to cause the robot to:
based on the RSSI value being greater than a preset value, identify that the door of the elevator is open.

6. The robot of claim 1, further comprising:
an inertial measurement unit (IMU) sensor,
wherein the one or more instructions, when executed by the one or more processors, are further configured to cause the robot to:
identify an inter-floor travel time based on a sensing value obtained through the IMU sensor; and
based on identifying that the elevator has moved from the first floor to the second floor based on the inter-floor travel time, identify whether the floor on which the elevator is stopped is the second floor based on the obtained Wi-Fi device identification information.

7. The robot of claim 6,
wherein the at least one memory stores inter-floor travel time information, and
wherein the one or more instructions, when executed by the one or more processors, are further configured to cause the robot to:
identify an estimated inter-floor travel time from the first floor to the second floor based on the inter-floor travel time information, and
based on identifying that the identified inter-floor travel time matches the estimated inter-floor travel time, identify that the elevator has moved from the first floor to the second floor.

8. The robot of claim 7, wherein the one or more instructions, when executed by the one or more processors, are further configured to cause the robot to, based on identifying that the identified inter-floor travel time does not match the estimated inter-floor travel time:
identify a third floor on which the elevator is stopped based on the inter-floor travel time information and the identified inter-floor travel time,
based on identifying that the elevator resumes movement after stopping at the third floor, re-identify the inter-floor travel time based on the sensing value obtained through the IMU sensor, and
identify whether the elevator has moved from the third floor to the second floor based on the re-identified inter-floor travel time.

9. The robot of claim 6, the one or more instructions, when executed by the one or more processors, are further configured to cause the robot to:
identify a first time point at which the elevator begins to accelerate based on the obtained sensing value,
identify a second time point at which the elevator begins to decelerate based on the obtained sensing value, and
identify the inter-floor travel time of the elevator based on the first and the second time points.

10. A method of controlling a robot, the method comprising:
based on the robot receiving an instruction to move the robot to a second floor from a first floor, controlling a driver of the robot to cause the robot to board an elevator;
based on identifying that the elevator is stopped, obtaining through a first communication interface of the robot Wi-Fi device identification information for one or more Wi-Fi devices;
identifying whether a floor on which the elevator is stopped is the second floor based on the obtained Wi-Fi device identification information;
based on identifying that the elevator is stopped on the second floor, identifying whether a door of the elevator is open based on a received signal strength indicator (RSSI) value of a signal received through a second communication interface of the robot; and
based on identifying that the door of the elevator is open, controlling the driver to cause the robot to get off the elevator.

11. The method of claim 10, wherein the identifying whether the floor on which the elevator is stopped is the second floor comprises:
obtaining Wi-Fi device identification information for the second floor from Wi-Fi device identification information for a plurality of floors, wherein the plurality of floors include the first and the second floors, and wherein the Wi-Fi device identification information for the plurality of floors is stored in at least one memory of the robot;
comparing the obtained Wi-Fi device identification information with the stored Wi-Fi device identification information for the second floor; and
based on identifying that the obtained Wi-Fi device identification information matches the stored Wi-Fi device identification information for the second floor, identifying that the floor on which the elevator is stopped is the second floor.

12. The method of claim 11,
wherein the obtained Wi-Fi device identification information comprises respective Wi-Fi signal intensities of each of the one or more Wi-Fi devices,
wherein the stored Wi-Fi device identification information comprises respective Wi-Fi signal intensities of each of one or more Wi-Fi devices located on the plurality of floors, and
wherein the comparing the obtained Wi-Fi device identification information with the stored Wi-Fi device identification information for the second floor comprises:
obtaining a first sorting order of the one or more Wi-Fi devices based on the respective Wi-Fi signal intensities,
obtaining a second sorting order of one or more Wi-Fi devices located on the second floor based on the stored Wi-Fi device identification information of the second floor, and
identifying whether the obtained Wi-Fi device identification information matches the stored Wi-Fi device identification information for the second floor by comparing the first sorting order and the second sorting order.

13. The method of claim 12, further comprising:
based on identifying that the obtained Wi-Fi device identification information does not match the Wi-Fi device identification information for the second floor, identifying a similarity value between the obtained Wi-Fi device identification information and the Wi-Fi device identification information for the second floor;
based on the similarity value being equal to or greater than a preset value, identifying that the floor on which the elevator is stopped is the second floor; and
updating the stored Wi-Fi device identification information for the second floor to the obtained Wi-Fi device identification information.

14. The method of claim 11, wherein the identifying that the door of the elevator is open comprises, based on the RSSI value being greater than a preset value, identifying that the door of the elevator is open.

15. A non-transitory computer-readable recording medium having instructions stored therein, which when executed by at least one processor of a robot, cause the robot to execute a method of operation, the method comprising:
based on the robot receiving an instruction to move the robot to a second floor from a first floor, controlling a driver of the robot to cause the robot to board an elevator;
based on identifying that the elevator is stopped, obtaining through a first communication interface of the robot Wi-Fi device identification information for one or more Wi-Fi devices;
identifying whether a floor on which the elevator is stopped is the second floor based on the obtained Wi-Fi device identification information;
based on identifying that the elevator is stopped on the second floor, identifying whether a door of the elevator is open based on a received signal strength indicator (RSSI) value of a signal received through a second communication interface of the robot; and
based on identifying that the door of the elevator is open, controlling the driver to cause the robot to get off the elevator.
